# EUROPÄISCHE PATENTSCHRIFT

(11) **EP 1 114 297 B1**
(45) Veröffentlichungstag und Bekanntmachung des Hinweises auf die Patenterteilung: **09.02.2005**
(21) Anmeldenummer: 99955713.5
(22) Anmeldetag: 15.09.1999
(51) Int. Cl.: G01D 9/00

(54) **EINRICHTUNG ZUR ERFASSUNG VON DATEN**
DEVICE FOR ACQUIRING DATA
DISPOSITIF D'ENREGISTREMENT DE DONNEES

(30) Priorität: 18.09.1998 DE 19842920
(43) Veröffentlichungstag der Anmeldung: 11.07.2001
(73) Patentinhaber: GKSS-Forschungszentrum Geesthacht GmbH, 21502 Geesthacht (DE)
(72) Erfinder: MASSON, Michel, D-28211 Bremen (DE); MARX, Stefan, D-23558 Lübeck (DE)
(74) Vertreter: Niedmers, Ole, Dipl.-Phys.
(86) Internationale Anmeldenummer: PCT/DE1999/002933
(87) Internationale Veröffentlichungsnummer: WO 2000/017609

(56) Entgegenhaltungen:
- EP-A- 0 511 807
- DE-A- 19 705 615
- GB-A- 2 218 237
- US-A- 4 972 099

## Beschreibung

Die Erfindung betrifft eine Einrichtung zur Erfassung von Daten, umfassend wenigstens ein Sensorelement zur Erfassung von Daten für ein Speicherelement wenigstens zum Einschreiben sowie Auslesen der erfaßten Daten, wobei das Sensorelement und das Speicherelement auf einem Trägerelement angeordnet sind.

Eine Einrichtung dieser Art ist bekannt (US-A-4 972 099). Die bekannte Einrichtung weist einen Programmspeicher auf, der als EI-PROM ausgebildet ist, in dem von außen ein Steuerprogramm einschreibbar ist.

Aus der DE-A-197 05 615 ist ebenfalls eine Vorrichtung zur Messung von Daten in Form von Temperaturzeitreihen bekannt, bei denen die Temperatur in regelmäßigen, vorbestimmten Intervallen elektronisch gemessen werden soll. Dabei sind auf einer Karte, wie sie für Telefonund andere Kartenfunktionen verwendet werden, eine Temperatursensor, ein Halbleiterspeicher und ein Programmspeicher und ein digitaler Prozessor ausgebildet.

Aus der EP-A-0 511 807 ist eine Vorrichtung mit einer Sensoreinheit zur Aufzeichnung und Darstellung physikalischer Größen bekannt, die eine Recheneinheit aufweist und auch einen Speicher, der auf einem Trägerelement angeordnet ist. Die Sensoreinheit soll 1 derart programmierbar sein, daß sie einen Eigentest der Sensoreinheit durchführen kann. Eine darüber hinausgehende Funktion des Programmspeichers wird nicht beschrieben.

Im Stand der Technik sind die vielfältigsten Einrichtungen zum Erfassen von physikalischen, chemischen und biologischen Parametern bekannt, die in allen nur denkbaren Bereichen der Industrie, der Wissenschaft, aber auch im privaten Bereich Anwendung finden. Parameter, die erfaßt werden, sind beispielsweise der Druck, die Temperatur, der Gasgehalt, der ph-Wert, die elektrische Leitfähigkeit bzw. die Wärmeleitfähigkeit usw., d.h. Parameter, die hier voranstehend nur beispielhaft für andere, hier nicht genannte Parameter stehen. Diese physikalischen, chemischen, biologischen Parameter usw. dienen als erfaßte Größen beispielsweise nachgeschalteten Steuerungs- und Regelungseinrichtungen und/oder zur Anzeige bzw. Darstellung auf Anzeigegeräten der vielfältigsten Art.

Regelmäßig wird ein bezüglich des zu erfassenden Parameters sensitives Sensorelement am Meß- bzw. Erfassungsort des Parameters positioniert, wobei regelmäßig unmittelbar am Meßort eine nachgeschaltete Elektronikeinrichtung die erfaßten Parameter in mittels Datenverarbeitungsanlagen und dergleichen verarbeitbare Signale umwandelt, was letztlich aber auf für den Fachmann bekannte Weise geschieht, so daß dieses hier nicht näher zu erläutern ist. Vielfach sind aber auch bei aufwendigeren elektronischen Einrichtungen, die in ihrer Struktur kompliziertere, erfaßte Sensorparameter bzw. Signale in elektronisch verarbeitbare Signale umsetzen müssen, die Sensorelemente unmittelbar am Ort der Erfassung der Parameter (Meßort) angeordnet, wohingegen die Elektronikauswerte- und -bearbeitungseinrichtung abgesetzt davon positioniert ist, wobei das Sensorelement bzw. die Sensorelemente mit der Elektronikauswerte- und -bearbeitungseinrichtung über Kabelverbindungen, aber ggf. auch Funkverbindungen und dergleichen verbunden sind.

Derartige Messungen mit Einrichtungen der letztgenannten Art sind vielfach, wenn überhaupt, nur mit sehr großem technischen Aufwand, beispielsweise bei in situ Messungen im Bereich der Meeresforschung, der Umweltforschung, der Umwelttechnologie, aber auch im Bereich der geologischen Forschung, durchführbar, insbesondere dann, wenn zwischen dem Sensorort und dem Ort der Positionierung der Elektronikauswerte- und -bearbeitungseinrichtung große Entfernungen, Wasser, wenn beispielsweise das Sensorelement auf dem Meeresboden postiert ist, gasförmige Medien, wenn beispielsweise das Sensorelement in Gastanks usw. angeordnet ist, vorliegen und bzw. oder eine Mehrzahl von Sensoren, die an unterschiedlichen Orten positioniert sind, ihre Daten bzw. Signale auf eine einzige elektronische Auswerte- bzw. Aufbereitungseinrichtung liefern sollen.

Für viele Anwendungszwecke sind die vorangehend skizzierten bisher vorhandenen Einrichtungen somit nicht oder nur sehr hohem technischen Aufwand realisierbar, was natürlich auch mit sehr hohen Gestehungskosten verbunden ist und zusätzlich mit erheblichen Kosten im Zusammenhang mit einer angestrebten regelmäßigen, ggf. kontinuierlich zu erfolgen habenden Auswertung der sensorisch erfaßten Parameter verbunden ist.

Es ist somit Aufgabe der vorliegenden Erfindung, eine Einrichtung der eingangs genannten Art zu schaffen, mit der auf sehr einfache Weise Daten, die auf physikalischen, chemischen, biologischen usw. Parametern beruhenden Daten erfaßt und gespeichert werden können, wobei die Einrichtung derart gestaltet sein soll, daß sie sich auch zum massenweisen sensorischen Einsatz bei sehr niedrigen Gestehungskosten eignet und wobei die Einrichtung sehr einfach einsetzbar und auch durch den ungeübten Laien handhabbar ist.

Gelöst wird die Aufgabe gemäß der Erfindung dadurch, daß das Sensorelement mit einer Beschichtung nach Art einer Membran ausgebildet ist.

Der Vorteil 1 der erfindungsgemäßen Lösung besteht im wesentlichen darin, daß dadurch, daß die Beschichtung des Sensorelements nach Art einer Membran ausgebildet ist, das Sensorelement als solches somit zwar gegen aggressive Medien geschützt ist, es kann aber dennoch zumindest an seinen sensorempfindlichen Punkten bzw. Bereichen durch die Membran hindurch beispielsweise chemische Parameter erfassen, kann ansonsten aber von dem Umgebungsmedium nicht negativ beeinflußt werden, und zudem darin, daß eine derart ausgebildete Einrichtung faktisch unmittelbar am Ort der zu erfassenden Parameter positioniert werden kann und, nachdem innerhalb eines bestimmbaren Zeitraums die Parameter erfaßt und gespeichert worden sind, die Einrichtung vom Erfassungsort entfernt und in eine elektronische Auswerteinrichtung überführt zu werden braucht, in der die in das Speicherelement im Zuge der Sensortätigkeit eingeschriebenen Sensordaten ausgelesen und einer Weiterverarbeitung, ggf. nach vorheriger Signalaufbereitung, zugeführt werden. Das Trägerelement ist dabei so beschaffen, daß es ohne gesonderte Betätigung durch eine Person lediglich an den Ort der aufzunehmenden Parameter verbracht werden muß, wobei im Speicherelement beispielsweise festverdrahtete Steuerungsalgorithmen die Funktion des Sensors beispielsweise nach Zeit und Sensorsequenzen und dergleichen steuern können. Da erfindungsgemäß keine kostspielige Auswerteelektronik auf der Einrichtung vorhanden ist, können die Gestehungskosten auf ein Minimum reduziert werden, da lediglich die unmittelbar zur Ausführung der sensorischeh Tätigkeit der Einrichtung notwendigen elektronischen Einrichtungen wie Speicherelement und Sensorelemente nötig sind. Da die Einrichtung unmittelbar am Ort der durchzuführenden Sensortätigkeit lediglich geeignet postiert werden muß, kann dieses durch den ungeübten Laien oder einen technisch an sich nicht vorgebildeten Wissenschaftler im Rahmen seiner Forschungstätigkeit geschehen, was gleichzeitig auch für das Entfernen der Einrichtung vom Ort der sensorischen Tätigkeit und dem überführen in eine Auswerte- bzw. Signalaufbereitungseinrichtung gilt, in der die erfaßten und gespeicherten Daten der Einrichtung weiterverarbeitet werden.

Gemäß einer vorteilhaften Ausgestaltung der Einrichtung weist das Trägerelement wenigstens teilweise ein kartenförmiges Format nach Art einer "SmartCard" oder einer Kreditkarte auf, was den Vorteil hat, daß die Einrichtung aufgrund ihrer somit guten Handhabbarkeit und ihres geringen Platzbedarfes gut transportiert, gut gelagert, gut vor Ort zur sensorischen Erfassung der Parameter sowie auch wiederum gut von dort zu der elektronischen Auswerte- und Aufbereitungseinrichtung überführt werden kann und in entsprechende Aufnahmeschlitze in der elektronischen Auswerte- und Aufbereitungseinrichtung eingeführt werden kann, um dort die im Speicherelement gespeicherten Daten auszulesen. Ggf. kann auch vor Ort der sensorischen Aufnahme eine Aufnahmevorrichtung postiert sein, in die die Einrichtung ebenfalls über einen dort ausgebildeten Schlitz und dergleichen eingeführt werden kann. Der Hinweis auf das kartenförmige Format einer "SmartCard" oder einer Kreditkarte soll lediglich den Hinweis auf die Größenverhältnisse in bezug auf die äußeren Abmaße und die Dicke des Trägerelementes geben. Natürlich hat die Funktion bzw. der Aufbau der erfindungsgemäßen Einrichtung mit einer Kreditkarte nichts zu tun.

Um den Vorgang der Erfassung der Daten mit Sensorelement und Speicherelement komfortabler auszubilden, ist es vorteilhaft, auf dem Trägerelement zusätzlich eine Recheneinrichtung vorzusehen, wobei die Recheneinrichtung beispielsweise in Form eines hochintegrierten Mikroprozessors ausgebildet sein kann, der im Stand der Technik als solcher bekannt ist. Durch den Einsatz einer Recheneinrichtung können auch vorzugsweise komplexere Parameter bzw. Daten erfaßt werden als dieses beispielsweise bei einer beispielsweise im Speicherelement festverdrahteten Steuerung der Parameter- bzw. Datenerfassung mittels des Sensors möglich wäre.

Um zudem die Parameter- bzw. Datenerfassung an die jeweiligen zu erfassenden Parameter individuell anpassen zu können, was im übrigen auch gleichzeitig für die Randbedingen im Zusammenhang mit der Erfassung bzw. Messung der Parameter gilt, d.h. Zeit, Wiederholungsrate, Meßpausen und um ggf. auch eine Vorselektion der erfaßten Meßdaten bzw. Parameter vornehmen zu können, ist es vorteilhaft, die Recheneinrichtung programmierbar auszubilden, so daß unterschiedliche Rechen- bzw. Auswerteprogramme für die unterschiedliche Datenerfassung auf einfache Weise herangezogen werden können, indem nämlich in das Speicherelement, soweit dafür Speicherplatz vorhanden ist, oder in einem gesonderten weiteren Speicherelement die unterschiedlichen Funktionsprogramme vorbeschriebener Art gespeichert werden.

Das Auslesen der im Speicherelement erfaßten Daten kann, nachdem die Einrichtung in eine elektronische Auswerte- bzw. Datenaufbereitungseinrichtung eingeführt worden ist bzw. in einen geeigneten Kontakt gebracht worden, so daß die Daten von der Einrichtung auf die elektronische Auswerte- bzw. Datenaufbereitungseinrichtung übertragen werden können, kann auf verschiedenste geeignete Weise geschehen, beispielsweise vorteilhaft über ein auf dem Trägerelement geeignet ausgebildetes und angeordnetes Interface.

Das Interface kann vorzugsweise ein Magnetstreifen sein, es kann vorzugsweise aber auch auf sehr einfache Weise durch eine Mehrzahl von auf dem Trägerelement ausgebildeten Kontakten gebildet werden, wobei diese Kontakte nachdem die Einrichtung in die elektronische Auswerte- bzw. Datenaufbereitungseinrichtung eingeführt worden ist bzw. mit dieser in einen geeigneten Kontakt gebracht worden ist, dort mit entsprechenden Kontakten des Trägerelements in Berührung kommen, so daß die im Speicherelement gespeicherten Daten ausgelesen werden können.

Das Interface ist natürlich auch grundsätzlich in der Lage, geeignete Daten von der elektronischen Auswerteund Datenaufbereitungseinrichtung auf das Speicherelement bzw. die Recheneinrichtung, soweit dort eine vorhanden ist, zu übertragen, um beispielsweise Befehle im Zusammenhang mit dem Steuerungsalgorithmus für die Änderung einer Steuerung des Sensors zu übertragen oder aber auch auf diese Weise unterschiedliche Programme für den Steuer- und/oder Auswertealgorithmus, soweit er durch eine gesonderte Recheneinrichtung gesteuert wird, zu laden.

Schließlich kann das Interface auch vorzugsweise durch wenigstens eine optogekoppelte Einrichtung gebildet werden, so daß für durchaus denkbare Spezialfälle eine galvanische Trennung zwischen der Einrichtung einerseits und der elektronischen Auswerte- und Datenaufbereitungseinrichtung andererseits beim Auslesevorgang der gespeicherten Daten und auch ggf. beim Übertragen von Programmdaten und dergleichen auf die Einrichtung gewährleistet ist.

Für bestimmte Fälle bzw. Anwendungen der Einrichtung kann es vorteilhaft sein, auf dem Trägerelement selbst wenigstens das Sensorelement und das Speicherelement mit einer eine elektrische Spannung liefernden Einrichtung zu versehen, so daß die Einrichtung völlig autark am jeweiligen Einsatzort, an dem sie ihre sensorische Tätigkeit ausführt, ist, d.h. dort keine gesonderten eine elektrische Spannung liefernden Einrichtungen vorhanden sein müssen. Es sind aber auch grundsätzlich Fälle denkbar, daß auch am Einsatzort eine elektrische Spannung mittels einer dort positionierten gesonderten Einrichtung zur Verfügung steht und die auf dem Trägerelement angeordnete Einrichtung nur als elektrische Puffereinrichtung oder für Notfälle vorzusehen oder für das Halten der gespeicherten Daten beim Transport zur elektronischen Auswerte- bzw. Datenaufbereitungseinrichtung.

Die auf dem Trägerelement angeordnete Einrichtung kann vorzugsweise beispielsweise ein Sekundärelement sein oder auch ein Primärelement, je nach Bestimmung und Gebrauch der Einrichtung.

Um die Einrichtung auch in aggressiven Medien oder in Medien, die zwar normalerweise chemisch neutral sind, einsetzen zu können, die aber zumindest einen negativen Einfluß auf das elektrische Leitverhalten bzw. auf die einzelnen Elemente auf der Trägerkarte und auf die Trägerkarte selbst auflösen können, ist es vorteilhaft, wenigstens das Sensorelement und das Speicherelement und/oder wenigstens Teile des Trägerelementes mit einer flüssigkeits- und/oder gasresistenten Beschichtung zu versehen, so daß die Einrichtung auch in den besagten aggressiven Medien oder im Wasser bei in situ Messungen ohne Schwierigkeiten eingesetzt werden kann.

Die Erfindung wird nun unter Bezugnahme auf die nachfolgenden schematischen Zeichnungen anhand eines Ausführungsbeispiels eingehend beschrieben. Darin zeigen:
- Fig. 1a: eine Draufsicht auf die Einrichtung,
- Fig. 1b: eine Ansicht auf die in Fig. 1a dargestellte Einrichtung von der Seite und
- Fig. 2: in Form eines Blockschaltbildes das Zusammenwirken der Einrichtung mit einer elektronischen Datenauswerte- und Datenaufbereitungseinrichtung, die in Verbindung mit einer gesonderten Rechnereinrichtung steht, die ggf. den Auswerte- und Datenaufbereitungsmodus und andere Auswerte- und Steuerfunktionen steuert bzw. steuern kann.

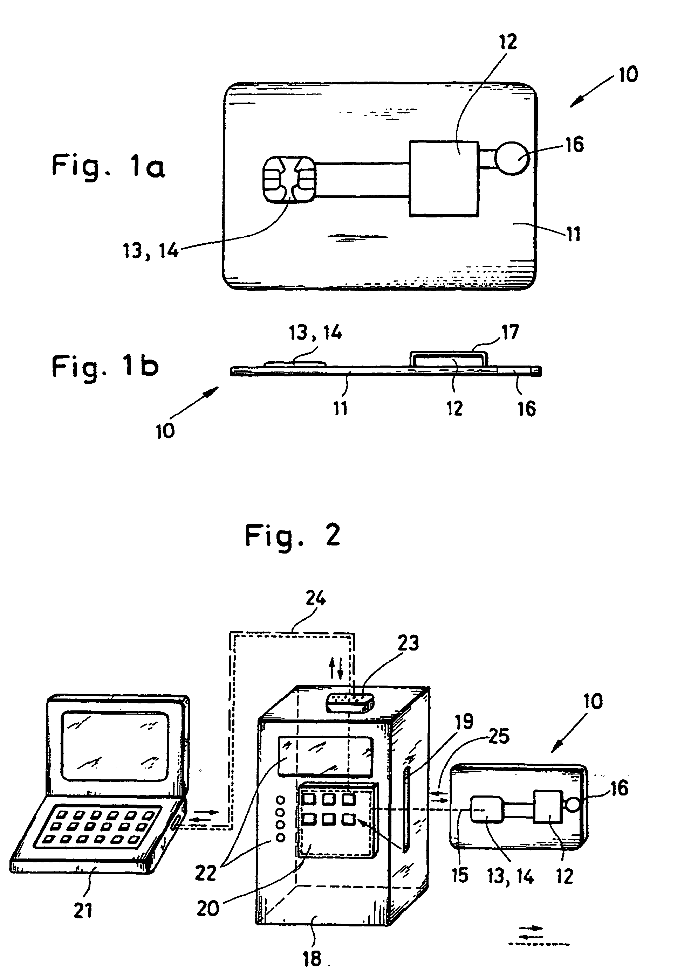

Eine Einrichtung 10, wie sie in Fig. 1a und 1b dargestellt ist, weist wenigstens ein Sensorelement 12 und ein Speicherelement 13 auf und eine Spannungsversorgungseinrichtung 16 in Form eines Primärelementes oder eines Sekundärelementes auf. Zur Klarstellung sei zunächst darauf hingewiesen, daß Sensorelement 12 auch bedeuten kann, daß es hier eine Mehrzahl von Sensorelementen gibt, die auf dem Trägerelement 11 angeordnet sind. Auch bezüglich des Speicherelementes 13 gilt, daß davon auch Ausgestaltungen der Einrichtung 10 gemeint sind, in denen eine Mehrzahl von Speicherelementen 13 angeordnet sind. Speicherelemente 13 im Sinne der Einrichtung 10 sind z.B. elektronische Speicherelemente wie RAMs, ROMs, PROMs, ePROMs usw., d.h. alle elektronischen Speicherelemente, wie sie im Stand der Technik vorhanden sind.

Das Trägerelement 11, auf dem das Sensorelement 12 und das Speicherelement 13 und die Spannungsversorgungseinrichtung 16 angeordnet sind, kann beispielsweise ein kartenförmiges Format aufweisen, wie es an sich durch das Format bekannt ist, das beispielsweise Kreditkarten, sogenannte "SmartCards" und Zugangskarten zu bestimmten abgeschlossenen Räumen aufweisen, zu denen nur die im Besitze der Karte befindlichen autorisierten Personen Zutritt haben. Die Einrichtung 10 ist aber grundsätzlich nicht in bezug auf ihr Trägerelement 11 auf derartige kartenförmige Formate beschränkt.

Auf dem Trägerelement selbst ist auch noch an geeigneter Stelle ein Interface 15, vgl. die punktierte Linie in Fig. 2, in der dieses lediglich schematisch angedeutet ist, angeordnet, über das das Auslesen der im Speicherelement 13 erfaßten Daten auf eine elektronische Auswerte- und Datenaufbereitungseinrichtung 18 erfolgt. Umgekehrt kann über das Interface 15 von der Datenauswerte- und Aufbereitungseinrichtung 18 ein Datenfluß auf das Speicherelement 13 und/oder auf die Recheneinrichtung 14 gegeben werden, was im einzelnen aber noch weiter unten dargelegt wird. Das Interface 15 kann beispielsweise durch einen Magnetstreifen, eine optogekoppelte Einrichtung oder auch auf einfache Weise durch eine Mehrzahl von Kontakten gebildet werden.

Während des bestimmungsgemäßen Betriebes wird die Einrichtung 10 an einem vorgewählten Ort postiert und nimmt über den Sensor 12, der auf geeignete Weise über Leitungen mit der Spannungsversorgungseinrichtung 16 und dem Speicherelement 13 bzw. der Recheneinrichtung 14 verbunden ist, die Daten der jeweiligen bestimmungsgemäß zu erfassenden physikalischen, chemischen, biologischen oder sonstigen Parameter auf, wobei die vom Sensorelement 12 ermittelten Werte der erfaßten Parameter im Speicherelement 13 als Daten entsprechend einem durch die Recheneinrichtung 14 vorgegebenen Auswerteund Speicheralgorithmus gespeichert werden.

Ist eine Messung am Meßort abgeschlossen, wird die Einrichtung 10 vom Meßort, der grundsätzlich ein beliebiger Meßort, beispielsweise auch im Wasser, sein kann, entfernt und einer Datenauswerte- und Aufbereitungseinrichtung 18 zugeführt. Die Datenauswerte- und Aufbereitungseinrichtung 18 besitzt beispielsweise einen Schlitz 19 zum Einführen der Einrichtung 10, ähnlich dem, wie er allgemein bei Geldautomaten und dergleichen bekannt ist. Derartige Teilvorrichtungen sind in bezug auf Aufbau und Funktion allgemein bekannt, so daß ein weiteres Eingehen darauf entbehrlich ist. Über das Interface 15 werden nun, von der Datenauswerte- und Aufbereitungseinrichtung 18 entweder direkt oder über eine gesonderte Recheneinrichtung 21 gesteuert, die sich im Speicherelement 13 befindenden Meßdaten ausgelesen und ggf. in einer in der Datenauswerte- und Aufbereitungseinrichtung 18 postierten weiteren Speichereinrichtung 20 zwischenspeichert.

Schon in der Datenauswerte- und Aufbereitungseinrichtung 18 kann die bestimmungsgemäße Auswertung der im Speicherelement 13 während des Meßvorganges erfaßten und gespeicherten Daten der zu erfassenden Parameter erfolgen, wobei nach Auswertung und Aufbereitung der Daten diese ggf. durch gesonderte Anzeigeeinrichtungen 22 angezeigt werden können, die in der Datenauswerte- und Aufbereitungseinrichtung 18 vorgesehen werden können, beispielsweise in Form eines Bildschirms, eines geeigneten Displays oder auch mittels geeignet ausgewählter Leuchtdiodenanzeigen.

Die Datenauswerte- und Aufbereitungseinrichtung 18 kann über eine geeignet ausgebildete Datenschnittstelle, beispielsweise in Form einer RS 232 Schnittstelle, mit einer gesonderten Recheneinrichtung 21 über eine Kabelverbindung 24 in Verbindung stehen, so daß beispielsweise die in der Datenauswerte- und Aufbereitungseinrichtung 18 gelieferten Daten, wenn gewünscht, endgültig in der Recheneinrichtung 21 einer Auswertung unterzogen werden können. Mittels der Recheneinrichtung 21 können die Daten in der Auswerte- und Aufbereitungseinrichtung 18, die von Speicherelement 13 kommen, aber auch selbst vollständig einer benötigten Auswertung bzw. Aufbereitung unterzogen werden.

Durch den Doppeltpfeil zwischen der Einrichtung 10 und der Datenauswerte- und Aufbereitungseinrichtung 18 ist angedeutet, daß auch von der Datenauswerte- und Aufbereitungseinrichtung 18 kommende Daten der Einrichtung 10 zugeführt werden können, beispielsweise Programme bzw. Programmalgorithmen, mit denen die auf dem Trägerelement 11 angeordnete Recheneinrichtung 14 betrieben werden soll, oder aber auch Daten, die für den auf die jeweilige Meßaufgabe angepaßten Erfassungsvorgang von Parametern bzw. Parameterdaten für das Sensorelement 12 auf das Speicherelement 13 vorgegeben werden. Das Programm für die Recheneinrichtung 14, soweit diese auf der Einrichtung 10 vorgesehen ist, kann auf beliebige Weise erstellt und beispielsweise über die Recheneinrichtung 21 und/oder die Datenauswerte- und Aufbereitungseinrichtung 18, je nach Art der Ausbildung derartiger Konfigurationen, über das Interface 15 auf die Recheneinrichtung 14 bzw. das Speicherelement 13 oder einen gesonderten, hier nicht dargestellten Programmspeicher für die Recheneinrichtung 14, der dann auf dem Trägerelement 11 ebenfalls angeordnet sein kann, übertragen werden.

Wir ersichtlich, kann erfindungsgemäß eine beliebige Zahl von Einrichtungen 10 an verschiedenen geeigneten Orten vorgesehen werden, in denen bestimmte physikal'ische, chemische, biologische Umwelt- oder sonstige Parameter erfaßt werden, wobei dann nach dem Erfassungsvorgang alle Einrichtungen 10 in beliebiger Reihenfolge der einzigen vorzusehenden Datenauswerte- und Aufbereitungseinrichtung 18 zugeführt werden können. Auf vorbeschriebene Weise können dann die Daten aus dem Speicherelement 13 ausgelesen werden und auf vorbeschriebene Weise können auch Daten in das Speicherelement bzw. einen gesonderten Programmspeicher für eine Recheneinrichtung 14, soweit diese vorgesehen ist, eingelesen werden, und zwar ggf. für verschiedene zu erfassende Parameter auf verschiedene, geeignet vorbestimmbare Weise.

### Bezugszeichenliste

- 10: Einrichtung
- 11: Trägerelement
- 12: Sensorelement
- 13: Speicherelement/Speichereinrichtung
- 14: Recheneinrichtung
- 15: Interface
- 16: Spannungsversorgungseinrichtung
- 17: Beschichtung
- 18: Datenauswerte- und Aufbereitungseinrichtung
- 19: Schlitz
- 20: Speicher
- 21: Recheneinrichtung
- 22: Anzeigeeinrichtung
- 23: Datenschnittstelle
- 24: Kabelverbindung
- 25: Doppeltpfeil

## Patentansprüche

1. Einrichtung zur Erfassung von Daten, umfassend wenigstens ein Sensorelement (12) zur Erfassung von Daten, sowie ein Speicherelement (13) wenigstens zum Einschreiben sowie Auslesen der erfaßten Daten, wobei das Sensorelement (12) und das Speicherelement (13) auf einem Trägerelement (11) angeordnet sind, **dadurch gekennzeichnet, daß** das Sensorelement (12) mit einer Beschichtung (17) nach Art einer Membran ausgebildet ist.

2. Einrichtung nach Anspruch 1, **dadurch gekennzeichnet, daß** das Trägerelement (11) wenigstens teilweise ein kartenförmiges Format nach Art einer "SmartCard" oder einer Kreditkarte aufweist.

3. Einrichtung nach einem oder beiden der Ansprüche 1 oder 2, **dadurch gekennzeichnet, daß** eine Recheneinrichtung (14) auf dem Trägerelement (11) angeordnet ist.

4. Einrichtung nach Anspruch 3, **dadurch gekennzeichnet, daß** die Recheneinrichtung (14) programmierbar ist.

5. Einrichtung nach einem oder mehreren der Ansprüche 1 bis 4, **dadurch gekennzeichnet, daß** das Auslesen der im Speicherelement (13) erfaßten Daten über ein am bzw. auf dem Trägerelement (11) angeordnetes Interface (15) erfolgt.

6. Einrichtung nach Anspruch 5, **dadurch gekennzeichnet, daß** das Interface (15) ein Magnetstreifen ist.

7. Einrichtung nach Anspruch 5, **dadurch gekennzeichnet, daß** das Interface (15) durch eine Mehrzahl von Kontakten gebildet wird.

8. Einrichtung nach Anspruch 5, **dadurch gekennzeichnet, daß** das Interface (15) durch wenigstens eine optogekoppelte Einrichtung gebildet wird.

9. Einrichtung nach einem oder mehreren der Ansprüche 1 bis 8, **dadurch gekennzeichnet, daß** auf dem Trägerelement (11) eine wenigstens das Sensorelement (12) und das Speicherelement (13) mit elektrischer Spannung vorsorgende Einrichtung (16) angeordnet ist.

10. Einrichtung nach Anspruch 9, **dadurch gekennzeichnet, daß** die Einrichtung (16) ein Sekundärelement bzw. eine Sekundärzelle ist.

11. Einrichtung nach Anspruch 9, **dadurch gekennzeichnet, daß** die Einrichtung (16) ein Primärelement bzw. eine Primärzelle ist.

12. Einrichtung nach einem oder mehreren der Ansprüche 1 bis 11, **dadurch gekennzeichnet, daß** das Sensorelement (12) und das Speicherelement (13) und/oder wenigstens Teile des Trägerelements (11) mit einer flüssigkeitsund/oder gasresistenten Beschichtung (17) versehen sind bzw. ist.

## Claims

1. Unit for detecting data, comprising at least one sensor element (12) for detecting data, as well as a memory element (13) at least for writing and reading the detected data, the sensor element (12) and the memory element (13) being disposed on a support element (11), **characterised in that** the sensor element (12) is provided with a covering (17) in the form of a membrane.

2. Unit as claimed in claim 1, **characterised in that** the support element (11) is at least partially of a card-type format in the manner of a smart card or a credit card.

3. Unit as claimed in one or both of claims 1 or 2, **characterised in that** a computer unit (14) is provided on the support element (11).

4. Unit as claimed in claim 3, **characterised in that** the computer unit (14) is programmable.

5. Unit as claimed in one or more of claims 1 to 4, **characterised in that** the detected data in the memory element (13) is read via an interface (15) disposed alongside or on the support element (11).

6. Unit as claimed in claim 5, **characterised in that** the interface (15) is a magnetic stripe.

7. Unit as claimed in claim 5, **characterised in that** the interface (15) is provided in the form of a plurality of contacts.

8. Unit as claimed in claim 5, **characterised in that** the interface (15) is provided in the form of at least one optically coupled unit.

9. Unit as claimed in one or more of claims 1 to 8, **characterised in that** a unit (16) supplying at least the sensor element (12) and the memory element (13) with electric voltage is disposed on the support element (11).

10. Unit as claimed in claim 9, **characterised in that** the unit (16) is a secondary element or a secondary cell.

11. Unit as claimed in claim 9, **characterised in that** the unit (16) is a primary element or a primary cell.

12. Unit as claimed in one of more of claims 1 to 11, **characterised in that** the sensor element (12) and the memory element (13) and/or at least parts of the support element (11) are provided with a liquid-resistant and/or gas-resistant covering (17).

## Revendications

1. Dispositif de saisie de données, comprenant au moins un capteur (12) pour saisir des données ainsi qu'une mémoire (13) au moins pour écrire et pour lire les données saisies, et où le capteur (12) et la mémoire (13) sont disposés sur un élément de support (11), **caractérisé en ce que** le capteur (12) est formé avec un revêtement (17) de type membrane.

2. Dispositif selon la revendication 1, **caractérisé en ce que** l'élément de support (11) comporte au moins en partie un format de cartes de type "Smart Card" ou carte de crédit.

3. Dispositif selon l'une ou les deux revendications 1 ou 2, **caractérisé en ce qu'**un dispositif de traitement des données (14) est placé sur l'élément de support (11).

4. Dispositif selon la revendication 3, **caractérisé en ce que** le dispositif de traitement des données (14) est programmable.

5. Dispositif selon l'une ou plusieurs des revendications 1 à 4, **caractérisé en ce que** la lecture des données saisies dans la mémoire (13) s'effectue par le biais d'une interface (15) placée au niveau ou sur l'élément de support (11).

6. Dispositif selon la revendication 5, **caractérisé en ce que** l'interface (15) est une piste magnétique.

7. Dispositif selon la revendication 5, **caractérisé en ce que** l'interface (15) est formée par un grand nombre de contacts.

8. Dispositif selon la revendication 5, **caractérisé en ce que** l'interface (15) est formée par au moins un système à couplage optique.

9. Dispositif selon l'une ou plusieurs des revendications 1 à 8, **caractérisé en ce qu'**un dispositif (16) prévoyant au moins le capteur (12) et la mémoire (13) avec une tension électrique est prévu sur l'élément de support (11).

10. Dispositif selon la revendication 9, **caractérisé, en ce que** le dispositif (16) est un élément secondaire ou une cellule secondaire.

11. Dispositif selon la revendication 9, **caractérisé en ce que** le dispositif (16) est un élément primaire ou une cellule primaire.

12. Dispositif selon une ou plusieurs des revendications 1 à 11, **caractérisé en ce que** le capteur (12) et la mémoire (13) et/ou au moins une partie de l'élément de support (11) est ou sont prévus avec un revêtement (17) isolant pour les liquides et/ou les gaz.
